# EUROPÄISCHE PATENTANMELDUNG

(11) **EP 1 376 002 A2**
(43) Veröffentlichungstag der Anmeldung: **02.01.2004**
(21) Anmeldenummer: 03012782.3
(22) Anmeldetag: 05.06.2003
(51) Int. Cl.: F17C 1/00

(54) **Toroidförmiger Tank, insbesondere für Flüssiggas**

(30) Priorität: 06.06.2002 PL 35429802
(71) Anmelder: Staniuk, Jacek, 76-200 Slupsk (PL)
(72) Erfinder: Staniuk, Jacek, 76-200 Slupsk (PL)
(74) Vertreter: Meyer, Ludgerus A.

(57) **Zusammenfassung**

Die Erfindung betrifft einen toroidförmigen Tank, bei dem eine der Bodenplatten (1) einen so profilierten Teil der Außenfläche des Tanks bildet, dass eine flache Ebene (4) gebildet wird, die eine Armaturenplatte (6) enthält.

## Beschreibung

Der Gegenstand der Erfindung bezieht sich auf einen toroidförmigen Tank, insbesondere für Flüssiggas, nach dem Oberbegriff des Anspruchs 1.

Aus der Patentanmeldung PCT/IT96/00140 ist ein toroidförmiger Tank mit zwei profilierten miteinander mit einer umlaufenden Schweißnaht verbundenen Bodenplatten (einer oberen und einer unteren Bodenplatte) bekannt, wobei die beiden Bodenplatten mit einem mittleren Teil, in Form eines profilierten Rohrs, verbunden sind.

In der oberen Bodenplatte weist der Tank eine Öffnung auf, die es ermöglicht, im Inneren des Tanks eine Pumpe anzuordnen. In der Öffnung ist (durch Einfügen in das Tankinnere) eine Anschlusseinheit montiert. Die Anschlusseinheit weist in ihrem Oberteil einen so profilierten Deckel auf, dass er im geschlossenen Zustand mit dem Bodenplattenprofil abgeschlossen ist.

Der Erfindung liegt die Aufgabe zugrunde, einen verbesserten toroidförmigen Tank anzugeben, der einen leichteren Zugang zu seinen Anschlüssen ermöglicht.

Diese Aufgabe wird durch die im Anspruch 1 angegebene Erfindung gelöst. Vorteilhafte Weiterbildungen der Erfindung sind in Unteransprüchen angegeben.

Der Kern der Erfindung besteht darin, dass bei einem toroidförmigen Tank mit zwei mit dem mittleren Teil in Form eines profilierten Rohrs verbundene Bodenplatten eine der Bodenplatten einen so profilierten Teil der Tankaußenfläche bildet, dass dieser Teil eine in einem spitzen Winkel zu der Horizontalebene des Tanks flache Ebene bildet. Die flache Ebene der Bodenplatte weist eine Armaturenplatte auf.

Die Armaturenplatte enthält ein so im Inneren des Tanks angeordnetes Entnahmerohr, dass es bis nah an den aus der unteren Bodenplatte gebildeten Boden reicht.

Die Armaturenplatte enthält auch ein Sicherheitsventil. Der mittlere Tankteil weist zusätzliche, den mittleren Tankteil abschließende Bodenplatten auf. Der mittlere Tankteil - der Rohrteil - enthält vorzugsweise Durchgangsöffnungen.

Der Gegenstand der Erfindung wird anhand eines Ausführungsbeispiels näher erläutert. Es zeigen:

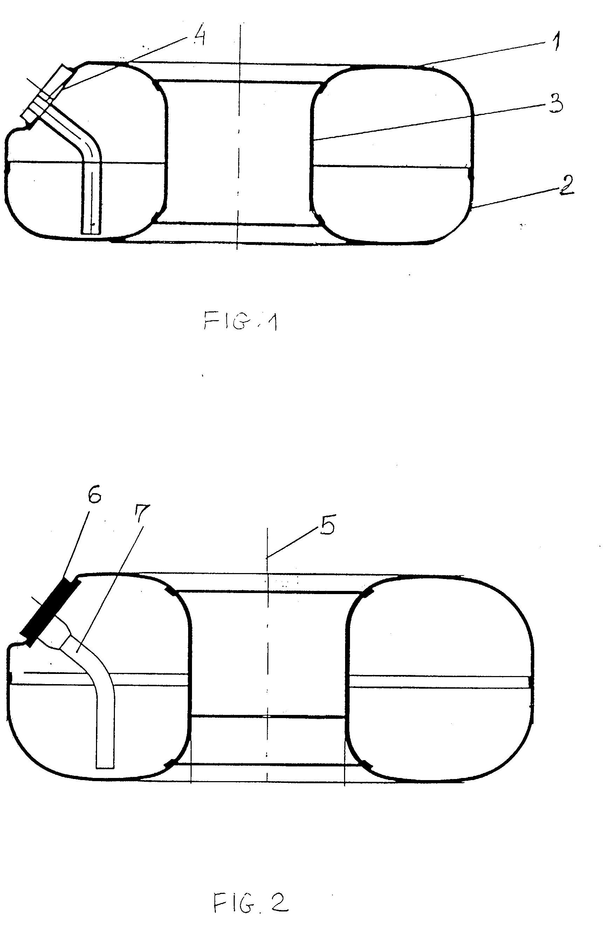

- Fig. 1: einen Tank mit einer Armaturenplatte und einem Entnahmerohr,
- Fig. 2: einen Tank mit einer Armaturenplatte, einem Entnahmerohr und einer zusätzlichen Bodenplatte,

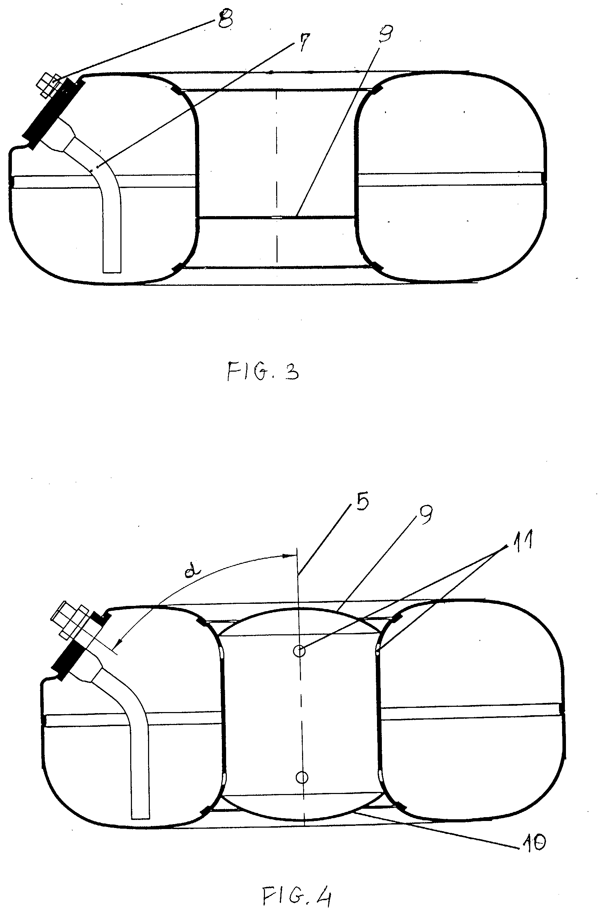

- Fig. 3: einen Tank mit einer Armaturenplatte, einem Entnahmerohr und einem Ventil sowie einer zusätzlichen Bodenplatte, und
- Fig. 4: einen Tank mit einer Armaturenplatte, einem Entnahmerohr, einem Ventil sowie zwei zusätzlichen Bodenplatten.

Ein toroidförmiger Tank, insbesondere für Flüssiggas gemäß der Erfindung weist zwei miteinander verbundene Bodenplatten 1, 2 auf, die mit einem mittleren Teil 3 in Form eines profilierten Rohrs, verbunden sind. Die Bodenplatten sind als zwei den Tank bildende ringförmige Halbschalen 1, 2 ausgebildet, die außenseitig unmittelbar miteinander verbunden sind, während sie innenseitig über einen kurzen Rohrabschnitt 3 verbunden sind.

Die obere Bodenplatte 1 weist einen so profilierten Teil der Tankaußenfläche auf, dass dieser eine in einem spitzen Winkel zur Horizontalebene des Tanks 5 flache Ebene 4 bildet.

Die flache Ebene 4 der Bodenplatte 1 enthält eine Armaturenplatte 6. Die Armaturenplatte enthält ein in das Tankinnere gerichtetes Entnahmerohr 7 und kann ein Sicherheitsventil 8 enthalten. Das Entnahmerohr 7 ist so abgebogen, dass es bis nahe an den Tankboden reicht. Der Tankboden ist durch die zweite Bodenplatte 2 gebildet. Der Tank kann zusätzliche, den rohrförmigen mittleren Tankteil 3 nach oben und unten abschließende Bodenplatten 9 und 10 enthalten.

In einer Ausführung, in der der zentrale Bereich des Tanks zusätzliche Bodenplatten 9 und 10 enthält, sind Durchgangsöffnungen 11 in dem mittleren Tankteil gebildet, wodurch eine zusätzliche mit Brennstoff gefüllte Tankkammer entsteht, die mit dem toroidförmigen Tank in unmittelbarem Flüssigkeits- bzw. Gasaustausch steht.

## Patentansprüche

1. Toroidförmiger Tank, insbesondere für Flüssiggas, mit zwei mit einem mittleren Teil in Form eines profilierten Rohrs verbundenen ringförmigen Bodenplatten, die im wesentlichen halbschalenförmig die Oberseite und die Unterseite des Tanks bilden, **dadurch gekennzeichnet, dass** eine der Bodenplatten (1) einen so profilierten Teil der Tankaußenfläche aufweist, dass dieses eine in einem spitzen Winkel (d) zur Horizontalebene des Tanks (5) verlaufende flache Ebene (4) bildet.

2. Toroidförmiger Tank nach Anspruch 1, **dadurch gekennzeichnet, dass** die flache Ebene (4) der Bodenplatte (1) eine Armaturenplatte (6) aufweist.

3. Toroidförmiger Tank nach Anspruch 2, **dadurch gekennzeichnet, dass** die Armaturenplatte (6) ein in das Tankinnere gerichtetes Entnahmerohr (7) enthält, das bis nahe an den aus der unteren Bodenplatte (2) gebildeten Tankboden reicht.

4. Toroidförmiger Tank nach Anspruch 2, **dadurch gekennzeichnet, dass** die Armaturenplatte (6) ein Sicherheitsventil (8) enthält.

5. Toroidförmiger Tank nach Anspruch 1 oder 2, **dadurch gekennzeichnet, dass** er zusätzliche, den mittleren Tankteil (3) nach oben und unten abschließende Bodenplatten (9) und (10) aufweist.

6. Toroidförmiger Tank nach Anspruch 1 oder 5, **dadurch gekennzeichnet, dass** er in dem mittleren Tankteil (3) seitliche Durchgangsöffnungen (11) zum Flüssigkeits- oder Gasdurchtritt in den umgebenden toroidförmigen Tankraum aufweist.
